# EUROPÄISCHE PATENTSCHRIFT

(11) **EP 2 921 819 B1**
(45) Veröffentlichungstag und Bekanntmachung des Hinweises auf die Patenterteilung: **01.05.2019**
(21) Anmeldenummer: 15450013.6
(22) Anmeldetag: 19.03.2015
(51) Int. Cl.: G01B 11/25, G01B 21/04, A61C 9/00

(54) **Verfahren zum Erfassen von Oberflächengeometrien**
METHOD FOR DETECTING SURFACE GEOMETRIES
PROCÉDÉ DE DÉTECTION DE GÉOMÉTRIES DE SURFACE

(30) Priorität: 21.03.2014 DE 102014103881
(43) Veröffentlichungstag der Anmeldung: 23.09.2015
(73) Patentinhaber: a.tron3d GmbH, 9020 Klagenfurt am Wörthersee (AT)
(72) Erfinder: Jesenko, Jürgen, 9584 Finkenstein (AT)
(74) Vertreter: Beer & Partner Patentanwälte KG

(56) Entgegenhaltungen:
- EP-A1- 2 672 461
- WO-A1-2012/083960
- US-B2- 7 433 810
- RICHARD A NEWCOMBE ET AL: "KinectFusion: Real-time dense surface mapping and tracking", MIXED AND AUGMENTED REALITY (ISMAR), 2011 10TH IEEE INTERNATIONAL SYMPOSIUM ON, IEEE, 26 October 2011 (2011-10-26), pages 127-136, XP032120956, DOI: 10.1109/ISMAR.2011.6162880 ISBN: 978-1-4577-2183-0

## Beschreibung

Die Erfindung betrifft ein Verfahren zum Erfassen der Oberflächengeometrie wenigstens eines Teils eines Objektes, insbesondere von intraoralen Strukturen, bei welchem zunächst ein physischer Abdruck von wenigstens einem Teil des Objektes angefertigt wird, wonach die Oberflächengeometrie des physischen Abdrucks dann entweder direkt, oder indirekt über einen Positivabdruck, während eines ersten Scanvorgangs mittels eines Scanners erfasst wird, wodurch eine virtuelle Repräsentation des physischen Abdrucks erzeugt wird, welche auf einem Speichermedium wenigstens temporär hinterlegt wird.

Es ist aus dem Stand der Technik schon länger bekannt, dreidimensionale Objekte durch physische Abdrücke und Abgüsse abzubilden. Im Zuge der Weiterentwicklung digitaler Abbildungsmethoden haben sich im Wesentlichen zwei technische Zweige gebildet.

Bei einem Zweig werden wie zuvor physische Abdrücke der zu erfassenden Objekte oder der jeweiligen Bereiche der Objekte erstellt. Diese Abdrücke werden dann mittels ortsfester Scanner entweder direkt oder nach dem Zwischenschritt eines Positivabdrucks erfasst. Dies hat den Vorteil, dass die dadurch gewonnenen digitalen Oberflächengeometrien genau sind, also der realen Oberflächengeometrie weitgehend entsprechen. Diese Genauigkeit ist vor allem durch die leichte Kalibrierbarkeit ortsfester Scanner bedingt. Viele Daten, die bei nicht ortsfesten Scannersystemen aufwändig gemessen und errechnet werden müssen und daher eine Vielzahl an Fehlerquellen bergen, können durch ortsfeste Scanner vorgegeben werden. So kann der Abdruck beispielsweise auf einer Drehscheibe positioniert werden, was dazu führt, dass bei einer Analyse von Aufnahmen des Scanners die Änderung des Blickwinkels auf den Abdruck bekannt ist. Analog kann, beispielsweise durch Führungsschienen, eine Abstandsänderung zwischen Aufnahmen bestimmt werden.

Allerdings haben ortsfeste Scanner auch verschiedene Nachteile. So kann es gerade aufgrund der vorgegebenen relativen Position des Scanners zum Abdruck (oder auch zu einem Objekt) zu Abschattungen kommen, durch welche Bereiche des Abdrucks (oder auch eines Objektes) nicht vermessen werden können. Weiters ist bei ortsfesten Scannern konstruktionsbedingt die räumliche Größe des zu vermessenden Abdrucks bzw. des zu vermessenden Objektes begrenzt. Es besteht zwar die theoretische Möglichkeit, Einzelabdrücke von Teilbereichen großer Objekte anzufertigen und die davon erfassten Oberflächengeometrien rechnerisch zusammenzufügen, allerdings entstünden dabei neue Fehlerquellen, welche die Vorteile ortsfester Scanner verringern.

Ein verwandtes System, bei dem ebenfalls Segmente zusammengefügt werden - in diesem Fall alte und neue Scans eines Objektes - zeigt die WO 2012/083960 A1.

Der zweite wesentliche Zweig beim digitalen Erfassen von Oberflächengeometrien verzichtet üblicherweise vollständig auf das Erstellen von physischen Abdrücken. Stattdessen werden mobile, üblicherweise handgeführte Scanner direkt um das zu erfassende Objekt herum bewegt, bis alle gewünschten Bereiche als digitale Oberflächengeometrie erfasst sind. Je nach Größe und Zugänglichkeit kann ein Objekt dabei zwar sehr umfassend aber nur mit begrenzter Genauigkeit erfasst werden, da die Relativbewegung des Scanners zum Objekt nicht bekannt ist, sondern ermittelt werden muss. Die dafür notwendigen Messungen bergen Fehler, welche sich dann in der Berechnung der Oberflächengeometrie fortsetzen.

Der Erfindung liegt daher die Aufgabe zu Grunde, die oben beschriebenen Nachteile der beiden erwähnten Systeme zu überwinden.

Gelöst wird diese Aufgabe erfindungsgemäß durch ein Verfahren mit den Merkmalen des Anspruchs 1.

Bei einem erfindungsgemäßen Verfahren zum Erfassen der Oberflächengeometrie wenigstens eines Teils eines Objektes, insbesondere von intraoralen Strukturen, wird zunächst ein physischer Abdruck von wenigstens einem Teil des Objektes angefertigt, wonach die Oberflächengeometrie des physischen Abdrucks dann entweder direkt, oder indirekt über einen Positivabdruck, während eines ersten Scanvorgangs mittels eines Scanners erfasst wird, wodurch eine virtuelle Repräsentation des physischen Abdrucks erzeugt wird, welche auf einem Speichermedium wenigstens temporär hinterlegt wird. Dann erfolgen erfindungsgemäß die folgenden Schritte:
- die virtuelle Repräsentation vom Speichermedium auslesen und zur Verfügung stellen,
- Überführen der zur Verfügung gestellten virtuellen Repräsentation in eine in einem Voxelgrid notierte, ergänzbare Notation, insbesondere eine TSDF,
- Durchführen eines zweiten Scanvorgangs am Objekt, wobei wenigstens ein Bereich des Objektes, der verändert oder durch den ersten Scanvorgang des physischen Abdrucks nicht erfasst wurde, erfasst wird,
- Aktualisieren der virtuellen Repräsentation des Objektes durch Ergänzen von Daten, welche aus dem zweiten Scanvorgang gewonnen wurden, in die zuvor erzeugte, in einem Voxelgrid notierte, ergänzbare Notation,
- Hinterlegen der veränderten virtuellen Repräsentation auf einem Speichermedium.

Dabei ist die Reihenfolge der Schritte nicht für alle Schritte zwingend vorgegeben. So kann beispielsweise die virtuelle Repräsentation auch gleichzeitig mit dem Durchführen des zweiten Scanvorgangs vom Speichermedium ausgelesen und zur Verfügung gestellt werden. Andererseits ist ein Aktualisieren der virtuellen Repräsentation erst nach dem zweiten Scanvorgang zielführend. Die möglichen, sinnvollen und vorteilhaften Abfolgen der einzelnen Schritte sind für den Fachmann klar und können dementsprechend durch diesen gewählt werden.

Gemäß einer bevorzugten Durchführungsform des Verfahrens erfolgt der erste Scanvorgang durch einen ortsfesten Scanner. So kann die besondere Genauigkeit eines ortsfesten Scanners vorteilhaft im Verfahren genutzt werden.

In einer alternativen, bevorzugten Durchführungsform des Verfahrens erfolgt der erste Scanvorgang durch einen Handscanner. So können auch große Abdrücke (oder deren Positivabdrücke) oder kompliziertere Formen erfasst werden.

In eine dritten "hybriden" Durchführungsform, welche auch unabhängig von der Erfindung vorteilhaft zum Einsatz kommen kann, können auch die Vorteile eines Handscanners und eines ortsfesten Scanners kombiniert werden, indem beispielsweise ein Handscanner durch einen Roboterarm geführt wird. So kann bei Bedarf die Flexibilität eines Handscanner genutzt werden, während jedoch Lageänderungen des Scanners zwischen einzelnen Aufnahmen gezielt gewählt und gesteuert werden können.

In einer weiteren bevorzugten Durchführungsform des Verfahrens erfolgt der zweite Scanvorgang durch einen Handscanner. Wenn, wie es beim zweiten Scanvorgang vorgesehen ist, das Objekt selbst gescannt wird, ist es häufig der Fall, dass nicht alle Oberflächen des Objektes einfach erreichbar bzw. einsehbar sind. So kann beispielsweise ein Zahnabdruck ohne weiteres in einem ortsfesten Scanner platziert werden. Die meisten intra-oralen Strukturen sind jedoch Teil des Mundraums oder mit diesem verbunden und daher nicht mit einem ortsfesten Scanner zu erfassen. Es ist daher vorteilhaft, das Objekt selbst durch einen Handscanner zu erfassen.

In einer weiteren bevorzugten Weiterbildung der Erfindung kann das Verfahren zusätzlich den Schritt des Visualisierens der virtuellen Repräsentation enthalten. Dadurch wird eine Bedienperson in der Nutzung des Scanners unterstützt, indem sie beispielsweise erkennt, welche Bereiche noch nicht erfasst sind oder sich seit dem Anfertigen des Abdrucks geändert haben.

Erfindungsgemäß enthält das Verfahren den Schritt des Überführens der zur Verfügung gestellten virtuellen Repräsentation in eine in einem Voxelgrid notierte, ergänzbare Notation, insbesondere eine TSDF. Dies ist vor allem dann vorteilhaft, wenn die virtuelle Repräsentation, wie im Stand der Technik üblich, als STL-Datei vorliegt, welche nicht oder nur sehr ungünstig zu ergänzen ist. Auf die besonderen Vorteile einer TSDF wird später noch eingegangen. Datenformate, die wie die STL auf Gitternetzen (Meshes) basieren, werden in der US 7,433,810 B2 erläutert.

Dieser Schritt kann entfallen, wenn die virtuelle Repräsentation direkt in einer für Ergänzungen geeigneten Notation hinterlegt ist.

In einer bevorzugten Weiterbildung des Verfahrens beinhaltet das Überführen den Schritt des Bestimmens einer Boundingbox für die virtuelle Repräsentation. Dieser Schritt ist für das Überführen vorteilhaft, da die meisten ergänzbaren Notationsarten einen definierten dreidimensionalen Raum benötigen. Dabei wird ein Hüllkörper um die virtuelle Repräsentation bestimmt. Dieser Hüllkörper ist üblicherweise eine einfache, geometrische Figur, wie beispielsweise eine Kugel, ein Ellipsoid, ein Würfel, ein Quader oder dergleichen, deren Größe so klein wie möglich gewählt wird, wobei jedoch die virtuelle Repräsentation vollständig innerhalb des Hüllkörpers liegen muss. Die Boundingbox bildet dabei die Basis für das Erstellen des definierten dreidimensionalen Raumes. Besonders bevorzugt wird dabei eine axis-aligned Boundigbox bestimmt. Eine axis-aligned Boundinbox ist in der Regel quaderförmig und die Kanten der Boundingbox verlaufen entlang eines orthogonalen bzw. kartesischen Koordinatensystems.

Weiters enthält das Überführen besonders bevorzugt den Schritt des Diskretisierens der Boundingbox. Dabei wird die Boundingbox in ein Raster mit diskreten Koordinaten unterteilt. Da das Diskretisieren bevorzugt äquidistant erfolgt, ist eine axis-aligned Boundingbox besonders vorteilhaft.

Weiters enthält das Überführen bevorzugt den Schritt des Ausrichtens der virtuellen Repräsentation bezüglich der Boundingbox. Dies ist vorteilhaft für das Verfahren, da auf diese Weise die Dimension der Boundingbox optimiert werden kann. Die optimierte Dimension der Boundingbox bewirkt zudem eine Steigerung der Ausführgeschwindigkeit (Performance-Steigerung) .

Gemäß einer weiteren bevorzugten Weiterbildung des erfindungsgemäßen Verfahrens beinhaltet das Überführen den Schritt des Vergrößerns der Boundingbox. So kann Raum für mögliche Ergänzungen geschaffen werden. Weiters wird bei Systemen, welche auch eine Scannergeometrie beim Scanvorgang berücksichtigen, Platz für diese geschaffen. Wie schon bei den Verfahrensschritten selbst gilt auch bei den Unterschritten des Überführens, dass die Reihenfolge sinnvoll durch den Fachmann gewählt werden kann. So ist es beispielsweise notwendig, dass zunächst eine Boundingbox bestimmt werden muss, bevor diese dann diskretisiert und vergrößert werden kann, wohingegen es für das Überführen nur minder erheblich ist, ob das Diskretisieren vor oder nach dem Vergrößern der Boundingbox erfolgt.

Es gibt allerdings Systeme, bei denen eine bestimmte Reihenfolge der Unterschritte des Überführens vorteilhaft ist. So profitieren beispielsweise Systeme, bei denen für eine optimale Funktion eine feste Anzahl an Rasterpunkten je Ausdehnungsrichtung der Boundingbox erforderlich ist, davon, wenn die Boundingbox zunächst vergrößert und dann einfach in die gewünschte Anzahl an Rasterpunkten unterteilt wird. So können unter Umständen Rechenschritte gespart werden.

In einer weiteren, besonders bevorzugten Durchführungsform des Verfahrens enthält das Überführen den Schritt des Erhebens der Abstände einzelner Rasterpunkte der diskretisierten Boundingbox zu einer Oberfläche der Repräsentation entlang einer definierten Richtung der Boundingbox und des Notierens der erhobenen Abstandswerte in einzelnen Rasterpunkten, wobei eine SDF erzeugt wird. Dabei handelt es sich um eine bevorzugte Form von ergänzbaren Notationen. In einer Weiterbildung dieser Durchführungsform folgt dann der Schritt des Setzens erhobener Abstände, welche einen definierten Wert überschreiten, auf den definierten Wert, wodurch eine TSDF erzeugt wird. Die so erzeugte TSDF hat verschiedene Vorteile bezüglich des Ergänzens neu gewonnener Oberflächeninformationen. Eine bevorzugte Methode des Ergänzens und Aktualisierens von virtuellen Repräsentationen, welche in Form einer TSDF notiert sind, kann der europäischen Patentanmeldung Nr. 13 450 056.0 (Veröffentlichungsnummer EP 2 886 043 A1) entnommen werden, in welcher auch die besonderen Vorteile einer TSDF näher erläutert werden. Erfindungsgemäß kann das Ergänzen und Aktualisieren wie in der europäischen Patentanmeldung Nr. 13 450 056.0 durchgeführt werden. Andere Formen sind aber auch möglich.

Gemäß einer weiteren bevorzugten Durchführungsform des Verfahrens kann das Überführen weiters den Schritt des Wechselns der Vorzeichen in der SDF oder TSDF enthalten. Bei einer vorzeichenbehafteten Distanzfunktion (signed distance function - SDF) geben die Vorzeichen an, ob sich ein Rasterpunkt, auch Voxel genannt, in der Richtung, entlang welcher der Abstand erhoben wurde (üblicherweise die z-Achse des kartesischen Koordinatensystems, welches zum Bilden der axis aligned Boundinbox verwendet wurde), vor oder hinter der notierten Oberfläche befindet. Wurde ein Negativabdruck vermessen, kann es dazu kommen, dass vom Objekt ausgehend, von welchem der Negativabdruck erstellt wurde, in der SDF die falsche Seite der erfassten Oberfläche als "außen liegend" verzeichnet ist. Dies kann bei einem späteren Ergänzen der SDF zu Fehlern führen. Diese lassen sich vermeiden, indem die Vorzeichen der SDF gewechselt werden. Dasselbe gilt analog für eine TSDF, bei welcher zwar der Betrag des erhobenen Abstandswertes begrenzt (abgeschnitten - truncated) ist, jedoch die Vorzeichen Gleiches angeben wie bei der SDF.

In einer weiteren bevorzugten Weiterbildung des erfindungsgemäßen Verfahrens enthält das Überführen den Schritt des Gewichtens der in den Rasterpunkten hinterlegten Abstandswerte. Durch das Gewichten von Abstandswerten in Rasterpunkten kann vermieden werden, dass der potentiell schlechtere, zweite Scanvorgang die beim ersten Scanvorgang erfassten Oberflächeninformationen verschlechtert. Besondere Methoden und Vorteile des Gewichtens von Abstandswerten werden ebenfalls in der europäischen Patentanmeldung Nr. 13 450 056.0 näher erläutert. Das Gewichten kann erfindungsgemäß wie in der europäischen Patentanmeldung Nr. 13 450 056.0 durchgeführt werden. Andere Formen sind aber auch möglich.

In einer weiteren bevorzugten Durchführungsform der Erfindung enthält das Verfahren den Schritt des Markierens von Bereichen, welche nicht durch das Scannen des veränderten Objekts aktualisiert werden sollen. Dieser Schritt kann insbesondere unabhängig von der gewählten, ergänzbaren Notation durchgeführt werden. Dabei werden generell Bereiche markiert, welche nicht aktualisiert werden sollen. Dabei kann es sich beispielsweise um leere Bereiche handeln, welche nicht durch versehentliche Aufnahmen, beispielsweise Aufnahmen der Zunge bei intra-oralen Anwendungen, verfälscht werden sollen.

Weitere bevorzugte Ausführungsformen der Erfindung sind Gegenstand der übrigen Unteransprüche.

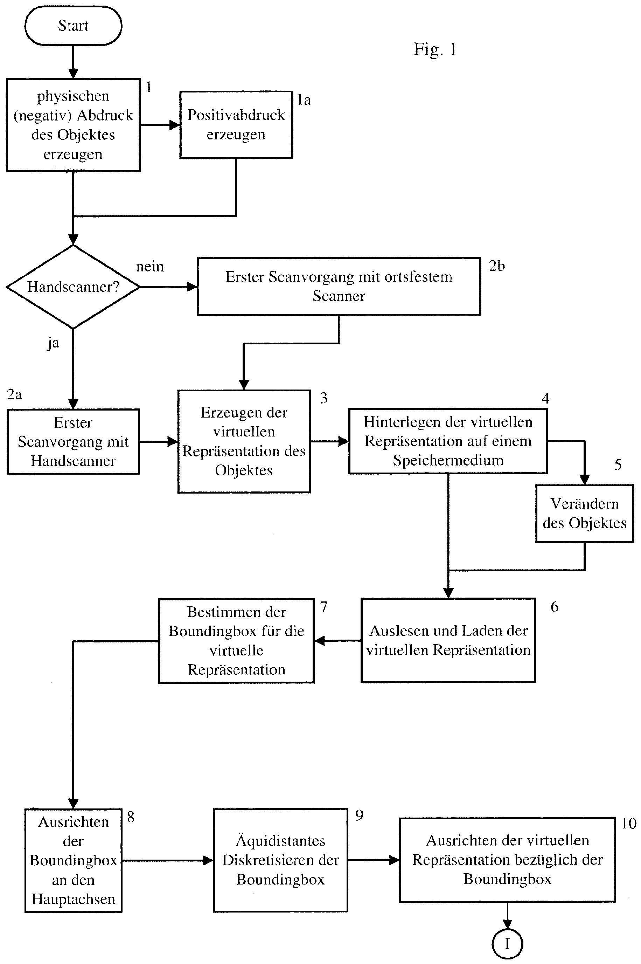

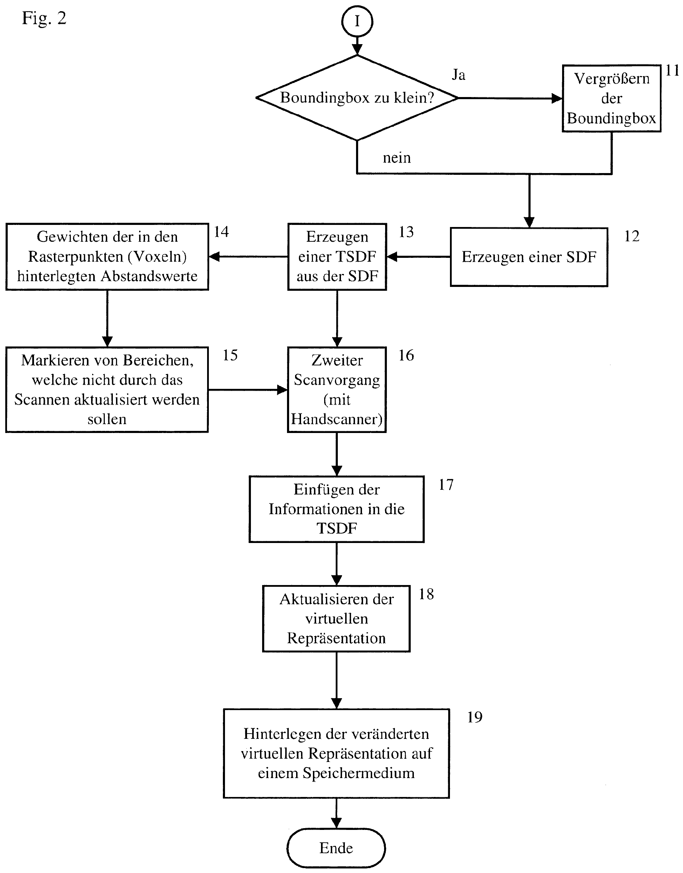

Nachstehend ist die Erfindung anhand einer beispielhaften Durchführungsform näher erläutert. Ein möglicher Ablauf des erfindungsgemäßen Verfahrens wird dabei anhand eines Flussdiagramms gezeigt, welches sich über die Fig. 1 und 2 erstreckt.

In Fig. 1 ist dargestellt, dass bei der beispielhaften Durchführungsform zunächst ein physischer (Negativ-) Abdruck des Objektes erzeugt 1 wird, beispielsweise durch Abformen eines Zahnes. Optional kann dann ein physischer Positivabdruck erzeugt werden 1a. Dann wird für den physischen Abdruck (oder gegebenenfalls den Positivabdruck) ein erster Scanvorgang durchgeführt. Dies kann mittels eines Handscanners oder eines ortsfesten Scanners erfolgen 2a, 2b. Dabei wird eine virtuelle Repräsentation des Objektes erzeugt 3. Die virtuelle Repräsentation wird dann auf einem Speichermedium hinterlegt 4. Bei dem Speichermedium kann es sich sowohl um ein temporäres Speichermedium, wie beispielweise ein RAM handeln, die virtuelle Repräsentation kann aber auch auf permanente Art beispielsweise auf einer CD gespeichert werden. Selbstverständlich sind aber auch Festplatten, SD-Karten und dergleichen geeignet, die virtuelle Repräsentation zu speichern. Insbesondere im Dentalbereich wird, sofern dreidimensionale Formen, beispielsweise von Zähnen, involviert sind, mit Daten des Typs STL gearbeitet. STL-Dateien geben dreidimensionale Oberflächengeometrien in Form von Polygonnetzen an, wobei jedes einzelne Polygon des Netzes üblicherweise ein Dreieck ist, welches über seine drei Eckpunkte und die Oberflächennormale des Dreiecks definiert ist. Die Eckpunkte sind üblicherweise in kartesischen Koordinaten angegeben.

Nach dem Hinterlegen 4 können optional Änderungen am Objekt vorgenommen werden 5. Beispielsweise können Zähne, von denen zuvor ein Abdruck erzeugt wurde, präpariert werden, um überkront zu werden.

Wurde die virtuelle Repräsentation auf einem Speichermedium hinterlegt, kann sie nach beliebiger Zeit wieder aufgerufen werden. Dazu wird sie vom Speichermedium ausgelesen und geladen 6.

Im nächsten Schritt 7 wird zunächst für die geladene virtuelle Repräsentation eine Boundingbox bestimmt. Diese wird dann entlang der Hauptachsen der STL bzw. des STL-Modells ausgerichtet 8. Dann wird die Boundingbox, vorzugsweise äquidistant und entlang kartesischer Koordinatenachsen, diskretisiert 9. Optional kann dann die virtuelle Repräsentation bezüglich der Boundingbox ausgerichtet werden 10. Optional kann die Boundingbox dann in einem nächsten Schritt 11(Fig. 2) vergrößert werden. Dies kann beispielsweise vorteilhaft sein, weil die virtuelle Repräsentation durch das Ausrichten über die Boundingbox hinaus ragt oder weil im ersten Scanvorgang nur ein Teilbereich des Objektes erfasst wurde oder auch, weil man neben dem Objekt auch die Scannergeometrie bzw. Positionen des Scanners während des Scanvorgangs erfassen möchte.

In einem nächsten Schritt 12 wird eine SDF (signed distance function) erzeugt. Dazu werden von den Rasterpunkten bzw. Voxeln aus, welche beim Diskretisieren (Schritt 9) entstanden sind, entlang einer gewählten Achsrichtung (üblicherweise in Richtung der z-Achse) die Abstände zur virtuellen Repräsentation gemessen. Bei Rasterpunkten, welche entlang der gewählten Achsrichtung vor der virtuellen Repräsentation liegen, wird der Abstandswert positiv notiert. Bei Rasterpunkten, welche entlang der gewählten Achsrichtung hinter der virtuellen Repräsentation liegen, wird der Abstand negativ notiert.

Da es sich als vorteilhaft erwiesen hat, statt mit einer SDF mit einer TSDF (truncated signed distance function) zu arbeiten, kann in einem nächsten Schritt 13 untersucht werden, welche Abstandwerte in den Rasterpunkten bzw. Voxeln einen bestimmten Wert überschreiten. Für Abstandswerte, deren Betrag unter dem bestimmten Wert liegt, bleibt der Abstandswert erhalten. In Voxeln, in denen Abstandswerte notiert sind, deren Betrag den bestimmten Wert überschreitet, werden die Abstandswerte auf den bestimmten Betrag gesetzt. In der so erzeugten TSDF können die in den Voxeln hinterlegten Abstandspunkte gewichtet werden 14. Eine mögliche Durchführungsform ist in der europäischen Patentanmeldung Nr. 13 450 056.0 näher beschrieben. Durch das Gewichten ist es möglich, die Präzision der im ersten Scanvorgang erfassten Daten auch bei einem Ergänzen um neue, erfasste Daten zu erhalten und dabei dennoch flexibel in der Notation zu bleiben. Optional können auch Bereiche der virtuellen Repräsentation markiert werden, welche nicht aktualisiert werden sollen 15, beispielsweise weil die Genauigkeit dieser Bereiche bereits so hoch ist, dass es wahrscheinlich ist, dass zusätzliche Daten jedenfalls eine Verschlechterung darstellen würden oder könnten.

Danach wird ein zweiter Scanvorgang durchgeführt 16. Dabei werden neue Informationen zur Oberflächengeometrie des Objektes gewonnen. Diese Informationen können zum einen neu sein, weil die betreffenden Bereiche des Objektes in Schritt 5 verändert wurden, oder zum anderen, weil Bereiche des Objektes erfasst werden, die im ersten Scanvorgang nicht erfasst wurden. Die neu gewonnenen Informationen werden dann in die zuvor erzeugte TSDF (Schritte 7 bis 13) eingefügt 17. Durch das Einfügen 17 der aus dem zweiten Scanvorgang gewonnenen Informationen in die TSDF kann die virtuelle Repräsentation aktualisiert werden 18. Die aktualisierte virtuelle Repräsentation wird dann wieder gespeichert 19.

## Patentansprüche

1. Verfahren zum Erfassen der Oberflächengeometrie wenigstens eines Teils eines Objektes, insbesondere von intraoralen Strukturen, bei welchem zunächst ein physischer Abdruck von wenigstens einem Teil des Objektes angefertigt wird, wonach die Oberflächengeometrie des physischen Abdrucks dann entweder direkt, oder indirekt über einen Positivabdruck, während eines ersten Scanvorgangs mittels eines Scanners erfasst wird, wodurch eine virtuelle Repräsentation des physischen Abdrucks erzeugt wird, welche auf einem Speichermedium wenigstens temporär hinterlegt wird, wobei das Verfahren die folgenden Schritte enthält:
- die virtuelle Repräsentation vom Speichermedium auslesen und zur Verfügung stellen,
- Überführen der zur Verfügung gestellten virtuellen Repräsentation in einein einem Voxelgrid notierte, ergänzbare Notation, insbesondere eine truncated signed distance function TDSF,
- Durchführen eines zweiten Scanvorgangs am Objekt, wobei wenigstens ein Bereich des Objektes, der verändert oder durch den ersten Scanvorgang des physischen Abdrucks nicht erfasst wurde, erfasst wird,
- Aktualisieren der virtuellen Repräsentation des Objektes durch Ergänzen von Daten, welche aus dem zweiten Scanvorgang gewonnen wurden, in die zuvor erzeugte, in einem Voxelgrid notierte, ergänzbare Notation,
- Hinterlegen der veränderten virtuellen Repräsentation auf einem Speichermedium.

2. Verfahren nach Anspruch 1, **dadurch gekennzeichnet, dass** der erste Scanvorgang durch einen ortsfesten Scanner erfolgt.

3. Verfahren nach Anspruch 1, **dadurch gekennzeichnet, dass** der erste Scanvorgang durch einen Handscanner erfolgt.

4. Verfahren nach einem der Ansprüche 1 bis 3, **dadurch gekennzeichnet, dass** der zweite Scanvorgang durch einen Handscanner erfolgt.

5. Verfahren nach einem der Ansprüche 1 bis 4, **dadurch gekennzeichnet, dass** das Verfahren den Schritt
- Visualisieren der virtuellen Repräsentation enthält.

6. Verfahren nach einem der Ansprüche 1 bis 5, **dadurch gekennzeichnet, dass** das Überführen den Schritt
- Bestimmen einer Boundingbox für die virtuelle Repräsentation
enthält.

7. Verfahren nach Anspruch 6, **dadurch gekennzeichnet, dass** eine axis-aligned Boundigbox bestimmt wird.

8. Verfahren nach Anspruch 6 oder 7, **dadurch gekennzeichnet, dass** das Überführen den Schritt
- Diskretisieren der Boundingbox
enthält.

9. Verfahren nach Anspruch 8, **dadurch gekennzeichnet, dass** das Diskretisieren äquidistant erfolgt.

10. Verfahren nach einem der Ansprüche 6 bis 9, **dadurch gekennzeichnet, dass** das Überführen den Schritt
- Ausrichten der virtuellen Repräsentation bezüglich der Boundingbox
enthält.

11. Verfahren nach einem der Ansprüche 6 bis 10, **dadurch gekennzeichnet, dass** das Überführen den Schritt
- Vergrößern der Boundingbox
enthält.

12. Verfahren nach einem der Ansprüche 8 bis 11, **dadurch gekennzeichnet, dass** das Überführen den Schritt
- Erheben der Abstände einzelner Rasterpunkte der diskretisierten Boundingbox zu einer Oberfläche der Repräsentation entlang einer definierten Richtung der Boundingbox und Notieren der erhobenen Abstandswerte in einzelnen Rastepunkten, wobei eine signed distance function SDF erzeugt wird, enthält.

13. Verfahren nach Anspruch 12, **dadurch gekennzeichnet, dass** das das Überführen den Schritt
- Setzen erhobener Abstände, welche einen definierten Wert überschreiten, auf den definierten Wert, wodurch eine TSDF erzeugt wird,
enthält.

14. Verfahren nach Anspruch 12 oder 13, **dadurch gekennzeichnet, dass** das Überführen den Schritt
- Wechseln der Vorzeichen in der SDF oder TSDF
enthält.

15. Verfahren nach einem der Ansprüche 12 bis 14, **dadurch gekennzeichnet, dass** das Überführen den Schritt
- Gewichten der in den Rasterpunkten hinterlegten Abstandswerte
enthält.

16. Verfahren nach einem der Ansprüche 1 bis 15, **dadurch gekennzeichnet, dass** das Verfahren den Schritt
- Markieren von Bereichen, welche nicht durch das Scannen des veränderten Objekts aktualisiert werden sollen
enthält.

## Claims

1. Method for capturing the surface geometry of at least one portion of an object, in particular of intraoral structures, in which initially a physical impression of at least one portion of the object is made, after which the surface geometry of the physical impression is then detected either directly, or indirectly via a positive impression, during a first scan by means of a scanner, as a result of which a virtual representation of the physical impression is created, which is stored at least temporarily on a storage medium, wherein the method includes the following steps:
- reading the virtual representation from the storage medium and providing it,
- converting the provided virtual representation to an expandable notation which is noted in a voxel grid, in particular a truncated signed distance function TDSF,
- carrying out a second scan on the object, wherein at least one region of the object which was changed or which was not detected by the first scan of the physical impression is detected,
- updating the virtual representation of the object by adding data obtained from the second scan, in the previously created expandable notation which is noted in a voxel grid,
- storing the changed virtual representation on a storage medium.

2. Method according to claim 1, **characterized in that** the first scan is carried out by a stationary scanner.

3. Method according to claim 1, **characterized in that** the first scan is carried out by a hand-held scanner.

4. Method according to one of claims 1 to 3, **characterized in that** the second scan is carried out by a hand-held scanner.

5. Method according to one of claims 1 to 4, **characterized in that** the method includes the step
- visualizing the virtual representation.

6. Method according to one of claims 1 to 5, **characterized in that** the conversion includes the step
- determining a bounding box for the virtual representation.

7. Method according to claim 6, **characterized in that** an axis-aligned bounding box is determined.

8. Method according to claim 6 or 7, **characterized in that** the conversion includes the step
- discretizing the bounding box.

9. Method according to claim 8, **characterized in that** the discretization takes place equidistantly.

10. Method according to one of claims 6 to 9, **characterized in that** the conversion includes the step
- orienting the virtual representation in relation to the bounding box.

11. Method according to one of claims 6 to 10, **characterized in that** the conversion includes the step
- enlarging the bounding box.

12. Method according to one of claims 8 to 11, **characterized in that** the conversion includes the step
- ascertaining the distances of individual grid points of the discretized bounding box from a surface of the representation along a defined direction of the bounding box, and noting the ascertained distance values in individual grid points, wherein a signed distance function SDF is created.

13. Method according to claim 12, **characterized in that** the conversion includes the step
- setting ascertained distances, which exceed a defined value, to the defined value, as a result of which a TSDF is created.

14. Method according to claim 12 or 13, **characterized in that** the conversion includes the step
- changing the signs in the SDF or TSDF.

15. Method according to one of claims 12 to 14, **characterized in that** the conversion includes the step
- weighting the distance values stored in the grid points.

16. Method according to one of claims 1 to 15, **characterized in that** the method includes the step
- marking regions which are not to be updated by the scanning of the changed object.

## Revendications

1. Procédé pour collecter la géométrie de surface d'au moins une partie d'un objet, en particulier de structures intra-orales, dans lequel une empreinte physique d'au moins une partie de l'objet est d'abord réalisée, puis la géométrie de surface de l'empreinte physique est ensuite collectée soit directement, soit indirectement au moyen d'une empreinte positive, pendant une première opération de numérisation au moyen d'un scanner, ce qui crée une représentation virtuelle de l'empreinte physique qui est enregistrée au moins temporairement sur un support de stockage, le procédé comprenant les étapes suivantes :
- lecture sur le support de stockage et mise à disposition de la représentation virtuelle,
- transformation de la représentation virtuelle mise à disposition dans une notation notée dans une trame de voxels et pouvant être complétée, en particulier une fonction distance signée tronquée TDSF,
- exécution d'une deuxième opération de numérisation sur l'objet, lors de laquelle au moins une zone de l'objet qui a été modifiée ou qui n'a pas été incluse dans la première opération de numérisation de l'empreinte physique est numérisée,
- actualisation de la représentation virtuelle de l'objet par l'ajout de données obtenues lors de la deuxième opération de numérisation, dans la notation notée dans une trame de voxels et pouvant être complétée précédemment générée,
- enregistrement de la représentation virtuelle modifiée sur un support de stockage.

2. Procédé selon la revendication 1, **caractérisé en ce que** la première opération de numérisation est exécutée par un scanner stationnaire.

3. Procédé selon la revendication 1, **caractérisé en ce que** la première opération de numérisation est exécutée par un scanner à main.

4. Procédé selon l'une des revendications 1 à 3, **caractérisé en ce que** la deuxième opération de numérisation est exécutée par un scanner à main.

5. Procédé selon l'une des revendications 1 à 4, **caractérisé en ce qu'**il contient l'étape de
- visualisation de la représentation virtuelle.

6. Procédé selon l'une des revendications 1 à 5, **caractérisé en ce que** la transformation contient l'étape de
- détermination d'une boîte englobante pour la représentation virtuelle.

7. Procédé selon la revendication 6, **caractérisé en ce qu'**une boîte englobante alignée sur l'axe est déterminée.

8. Procédé selon la revendication 6 ou 7, **caractérisé en ce que** la transposition contient l'étape de
- discrétisation de la boîte englobante.

9. Procédé selon la revendication 8, **caractérisé en ce que** la discrétisation est réalisée de façon équidistante.

10. Procédé selon l'une des revendications 6 à 9, **caractérisé en ce que** la transposition contient l'étape
- d'orientation de la représentation virtuelle par rapport à la boîte englobante.

11. Procédé selon l'une des revendications 6 à 10, **caractérisé en ce que** la transposition contient l'étape
- d'agrandissement de la boîte englobante.

12. Procédé selon l'une des revendications 8 à 11, **caractérisé en ce que** la transposition contient l'étape de
- mesurer des distances entre les points de trame différents de la boîte englobante discrétisée et une surface de la représentation le long d'une direction définie de la boîte englobante et notation des valeurs de distance mesurées en points de trame différents, en générant une fonction distance signée SDF.

13. Procédé selon la revendication 12, **caractérisé en ce que** la transformation contient l'étape de
- définition des distances mesurées, dépassant une valeur définie, à la valeur définie, en générant ainsi une fonction TSDF.

14. Procédé selon la revendication 12 ou 13, **caractérisé en ce que** la transposition contient l'étape de
- changer de signe dans la fonction SDF ou TSDF.

15. Procédé selon l'une des revendications 12 à 14, **caractérisé en ce que** la transformation contient l'étape de
- pondération des valeurs de distance enregistrées dans les points de trame.

16. Procédé selon l'une des revendications 1 à 15, **caractérisé en ce qu'**il contient l'étape de
- marquage de zones qui ne doivent pas être actualisées par la numérisation de l'objet modifié.
